**Europäisches Patentamt**

**European Patent Office**

**Office européen des brevets**

(11) Veröffentlichungsnummer: **0 166 206**
A2

## (12) EUROPÄISCHE PATENTANMELDUNG

(21) Anmeldenummer: **85106315.6**

(22) Anmeldetag: **23.05.85**

(51) Int. Cl.⁴: **H 02 H 11/00**

(30) Priorität: **26.05.84 DE 3419751**
**15.05.85 DE 3517566**

(43) Veröffentlichungstag der Anmeldung: **02.01.86**
**Patentblatt 86/1**

(84) Benannte Vertragsstaaten: **AT CH DE GB LI NL SE**

(71) Anmelder: **BBC Aktiengesellschaft Brown, Boveri & Cie.,**
**Haselstrasse, CH-5401 Baden (CH)**

(72) Erfinder: **Kuntermann, Jürgen, Dr. Dipl.-Ing.,**
**Silbergasse 21a, D-6901 Wilhelmsfeld (DE)**

(74) Vertreter: **Kempe, Wolfgang, Dr. et al, c/o Brown, Boveri**
**& Cie AG Postfach 351, D-6800 Mannheim 1 (DE)**

(54) **Verfahren und Einrichtung zum schaltfehlergeschützten Betätigen einer aus mehreren Schaltfeldern bestehenden Schaltanlage in einem elektrischen Energieverteilungsnetz.**

(57) Zur Lösung der Verriegelungsaufgabe werden in Einrichtungen zur Feldverriegelung in den Schaltfeldern einer Schaltanlage Informationen über Zustände (Schaltzustände, Erdung usw.) der übrigen Anlagenteile benötigt. Diese Zustände können in einer Nachbildung der Anlage erfaßt und von dort abgefragt werden. Mit der Erfindung wird vorgeschlagen, als Nachbildung, je Sammelschienensystem (SSI,SSII) der Schaltanlage ein Bussystem (BI,BII) vorzusehen, dem die Zustände aller Schaltfelder (SF) eingeprägt werden und von dem Feldverriegelungen (FV) die benötigten Informationen über Zustände abfragen können. Als Bussystem (B) ist sowohl ein passives Parallelbussystem als auch ein serielles Bussystem geeignet.

BBC Aktiengesellschaft
BROWN,BOVERI & CIE
Baden/Schweiz
Mp.-Nr. 558/85

13. Mai 1985
ZPT/P3-Sf/Bt

Verfahren und Einrichtung zum schaltfehlergeschützten Betätigen einer aus mehreren Schaltfeldern bestehenden Schaltanlage in einem elektrischen Energieverteilungsnetz

Die vorliegende Erfindung betrifft ein Verfahren zum schaltfehlergeschützten Betätigen einer aus mehreren Schaltfeldern bestehenden Schaltanlage in einem elektrischen Energieverteilungsnetz nach dem Oberbegriff des Anspruchs 1 sowie eine Schaltungsanordnung zur Durchführung des Verfahrens.

Ein solches Verfahren bzw. eine Einrichtung zur Durchführung des Verfahrens ist aus der DE-OS 32 30 404 bekannt. Bei dem daraus bekannten Verfahren gewährleistet ein Schaltfehlerschutz, daß Schalthandlungen in Schaltfeldern nur unter Einhaltung gewisser Sicherheitsbedingungen ausgeführt werden können. Mit dem Schaltfehlerschutz wird durch Verriegeln der betreffenden Schalter die Ausführung einer beabsichtigten Schalthandlung solange blockiert, bis alle Bedingungen für ein gefahr-

558-85 2 0166206

loses Schalten erfüllt sind. So dürfen beispielsweise
Trennschalter unter Last nicht geschaltet werden, Erdungsschalter dürfen nur nach Sicherstellung der Spannungsfreiheit des zu erdenden Schaltanlagenteils geschaltet werden und Leistungsschalter dürfen nicht eingeschaltet werden, wenn ein Trennschalter im gleichen
Stromkreis in Störstellung steht.

Aus der genannten DE-OS 32 30 404 ist es bekannt, in
jedem Schaltfeld eine Einrichtung SFP vorzusehen, in der
Feldzustände (auf das jeweilige Schaltfeld bezogene Betriebszustände) erfaßt und gespeichert werden, also eine
Nachbildung des Feldzustandes geschaffen wird. Außerdem
ist daraus bekannt, aus den einzelnen Feldzuständen ein
Gesamtbild des Zustandes der gesamten Schaltanlage zu
erstellen und in den Einrichtungen SFP der Schaltfelder
zu speichern. Dazu müssen jedoch die Feldzustände der
einzelnen Schaltfelder zu einer zentralen Einrichtung,
nämlich einem Sammelspeicher BSP übertragen werden, wo
das Gesamtbild erstellt und von dort an alle Schaltfelder gesendet wird. Der Sammelspeicher BSP muß den Aufbau
der Schaltanlage kennen und somit bei einer Änderung der
Schaltanlage angepaßt werden. Außerdem sind solche zentralen Einrichtungen aus sicherheitstechnischen Aspekten
als Schwachstellen anzusehen.

Ein weiteres Verfahren zum Betrieb einer Schaltanlage
ist aus der DE-OS 32 30 468 bekannt. Auch bei diesem
Verfahren ist eine Zusammensetzung von einzelnen Nachbildungen zu einem Gesamtbild in einer zentralen Einrichtung vorgesehen, wobei die einzelnen Schaltfelder
über ein sternförmiges Bussystem mit der zentralen Einrichtung verbunden sind.

Ausgehend von der DE-OS 32 30 404 liegt der Erfindung die Aufgabe zugrunde, ein Verfahren bzw. eine Schaltungsanordnung anzugeben, bei dem bzw. bei der keine zentrale Verarbeitungseinheit für die Erstellung eines Gesamtbildes des Schaltanlagenzustandes erforderlich ist, und eine Anlagenerweiterung auf einfache Weise möglich ist.

Diese Aufgabe wird bei einem Verfahren nach dem Oberbegriff des Anspruchs 1 durch dessen kennzeichnende Merkmale gelöst. Eine Schaltungsanordnung zur Durchführung des Verfahrens ist im Anspruch 2 angegeben. Vorteilhafte Ausgestaltungen sind den Unteransprüchen zu entnehmen.

Vorteile des Verfahrens bzw. der Schaltungsanordnung bestehen darin, daß bei Anlagenerweiterungen an der bestehenden Nachbildung nichts geändert werden muß, sondern lediglich eine Verbindung des neuen Anlagenteiles mit dem Bussystem genügt. Eine Ausführung des Bussystems als Parallelbus ist besonders einfach. Die Busleitungen nehmen bestimmte Zustände an, die dem Gesamtbild des zugehörigen Sammelschienensystems entsprechen. Das Gesamtbild ergibt sich also von selbst durch das Einprägen der Zustände der einzelnen Schaltfelder auf die Busleitungen. Bei größeren Entfernungen zwischen einzelnen Teilen der Schaltanlage kann ein serieller Bus günstiger sein als ein paralleler Bus. Damit sich dabei keine Schwachstelle durch einen zentralen Busverwalter ergibt, kann ein bekanntes Bussystem eingesetzt werden, das ohne Busverwalter auskommt, indem z.B. die Busverwalter-Funktion zyklisch von einem zum nächsten Teilnehmer weitergegeben wird. Weiterhin ist vorteilhaft, daß außer Geräteverriegelungen auch Betriebsverriegelungen auf gleiche Weise dem Bussystem eingeprägt werden können. Die Struktur der Schaltungsanordnung ist nach der Struktur der Hochspannungsanlage ausgerichtet.

Anhand von Ausführungsbeispielen und der Zeichnung wird die Erfindung nachstehend näher erläutert.

Es zeigen:

Fig. 1 Beispiel einer Schaltanlage mit Bussystemen zur Nachbildung der Anlagenzustände,

Fig. 2 Beispiel einer Ausführung des Bussystems als Parallelbussystem,

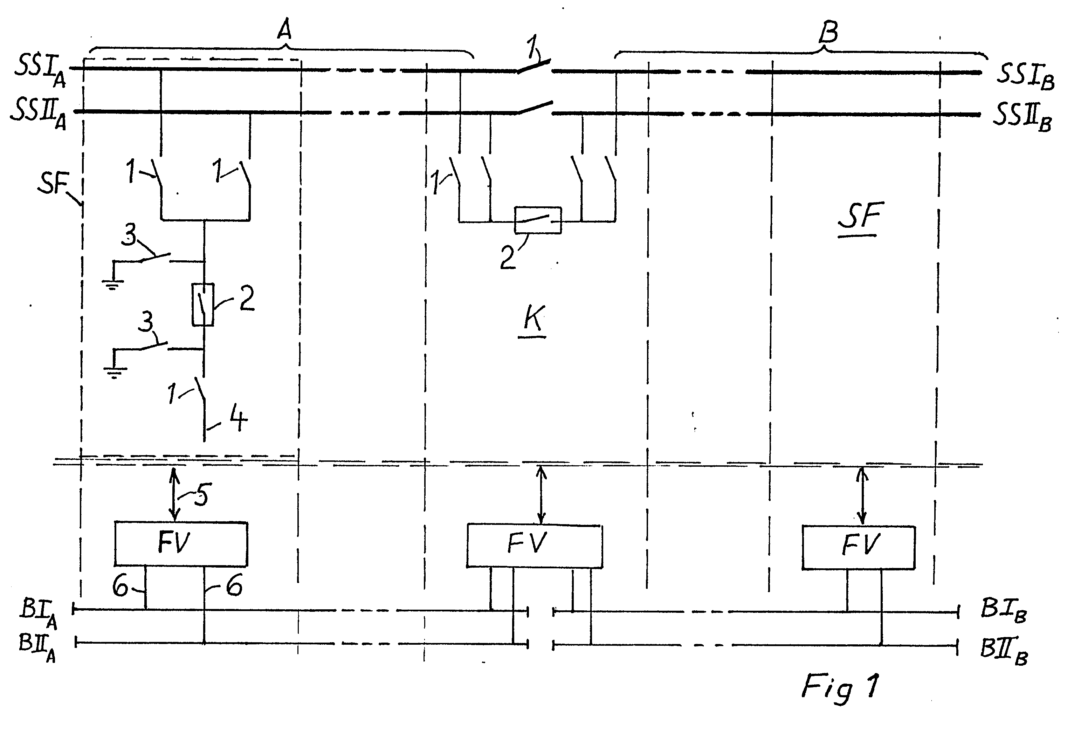

Fig. 1 zeigt ein Beispiel für eine Hochspannungsschaltanlage. Es handelt sich um ein Drehstromsystem, das in üblicher Weise einphasig dargestellt ist. Die Schaltanlage enthält zwei Sammelschienensysteme SSI und SSII, die in zwei Abschnitte A und B unterteilt sind. Die Sammelschienen SSI und SSII der einzelnen Abschnitte A und B sind deshalb mit Indizes A und B bezeichnet. An die Sammelschienen SSI und SSII sind mehrere Schaltfelder SF angeschlossen. Über ein Koppelfeld K können die Sammelschienen $SSI_A$ und $SSII_A$, $SSI_B$, $SSII_B$ quer und längs miteinander gekuppelt werden. Die Schaltfelder SF enthalten Anordnungen von Trennschaltern 1, Leistungsschaltern 2 und Erdungsschaltern 3, womit Abzweigleitungen 4 mit einer der Sammelschienen SSI, SSII verbunden oder geerdet werden können.

Jedem Schaltfeld SF ist eine mit Feldverriegelung FV bezeichnete Einrichtung zur Feldverriegelung zugeordnet. Die Feldverriegelung FV stellt eine verbindungsprogrammierte oder speicherprogrammierte Verarbeitungseinheit dar. Über Informationsleitungen 5 werden Stellungen der Schaltgeräte 1, 2, 3 an die Feldverriegelung FV gemeldet. Außerdem werden Informationen aus der Feldverriegelung FV in das Schaltfeld SF übertragen.

Jedem Sammelschienensystem $SSI_A$, $SSII_A$, $SSI_B$, $SSII_B$ ist ein Bussystem $BI_A$, $BII_A$, $BI_B$, $BII_B$ zugeordnet.

Die Feldverriegelungen FV sind jeweils mit zwei Bussystemen $BI_A$ und $BII_A$ oder $BI_B$ und $BII_B$ über Anschlußleitungssysteme 6 verbunden. Lediglich die Feldverriegelung
FV des Kuppelfelds K ist mit allen vier Bussystemen $BI_A$,
$BII_A$, $BI_B$, $BII_B$ verbunden.

Die Bussysteme B (die Bezeichnung B steht für $BI_A$, $BII_A$,
$BI_B$ oder $BII_B$) stellen Nachbildungen der Sammelschienensymste SS (die Bezeichnung SS steht für $SSI_A$, $SSII_A$,
$SSI_B$ oder $SSII_B$) dar bezüglich der physikalischen Zustände (elektrisch oder mechanisch), die im Sammelschienensystem SS vorherrschen. Ein Sammelschienensystem SS
kann z.B. geerdet, an eine Abzweigleitung 4 geschaltet
oder frei schwebend sein.

Die Feldverriegelungen FV benötigen außer den Informationen, die sie über die Informationsleitungen 5 aus dem
zugeordneten Schaltfeld SF erhalten, auch weitere Informationen über Zustände im gesamten Schaltanlagensystem
SSI und SSII, damit sie Verriegelungsbedingungen überprüfen und Schalthandlungen freigeben können. Diese Informationen erhalten sie über die Anschlußleitungen 6
von den Bussystemen BI und BII. Den Bussystemen B sind
nämlich Zustände, die Sammelschienen SS insgesamt betreffen, eingeprägt. Solche Zustände können z.B. sein:

1. Die Sammelschiene ist geerdet,
2. die Sammelschiene ist mit einer anderen Sammelschiene
   quer gekuppelt,
3. ein Schaltgerät, das mit der Sammelschiene verbunden
   ist, befindet sich in einer Zwischenstellung,
4. ein Schaltgerät der Längskupplung der Sammelschiene
   befindet sich in einer Zwischenstellung,
5. Schaltgeräteversagen,
6. in einem Sammelschienensystem sind zwei Sammelschienentrenner gleichzeitig eingeschaltet (wird als Kuppelschalter-Ausschaltsperre bezeichnet).

Diese beispielhaft aufgeführten Informationen können noch durch weitere ergänzt werden, z.B. auch durch Informationen zur Betriebsverriegelung neben den Informationen zur Schaltgeräteverriegelung.

Aufgrund der Informationen zur Schaltgeräteverriegelung werden einzelne Schaltgeräte, Trenner, Erder und dergleichen verriegelt oder freigegeben. Diese feldbezogenen Verriegelungsbedingungen der einzelnen Schaltgeräte eines Schaltfeldes untereinander werden im Baustein "Feldverriegelung FV" verarbeitet. Die notwendigen Informationen entnimmt die Feldverriegelung FV über die Informationsleitungen 5 den Stellungsmeldungen seines Schaltfeldes SF. Soweit anlagenbezogene Verriegelungsbedingungen zu beachten sind, werden die dazu notwendigen Informationen aus den Bussystemen BI und BII bezogen. Die sammelschienenrelevanten Zustände, die durch die einzelnen Schaltfelder SF erzeugt werden, werden nach dem Prinzip einer ODER-Schaltung dem Bussystem BI bzw. BII eingeprägt.

Das Bussystem B kann mehrere Zustandsarten (z.B. Sammelschiene geerdet, Sammelschiene quer gekoppelt) unterscheiden; d.h. das Bussystem B wird so konzipiert, daß es die benötigte Anzahl von Zustandsarten unterscheiden kann. Jede Feldverriegelung FV kann dem Bussystem B Zustände einprägen und das Bussystem B bezüglich der im jeweiligen Sammelschienensystem SS gegebenen Zustände abfragen. Eine Feldverriegelung FV braucht nicht zu wissen, wodurch, d.h. durch welche andere Feldverriegelung FV ein bestimmter Zustand herbeigeführt ist. Zur Erfüllung der Verriegelungsaufgabe genügt die Tatsache, daß ein bestimmter Zustand im Sammelschienensystem SS gegeben ist.

Zustände, die die Quer- oder Längskupplung von Sammelschienensystemen SS betreffen, werden von der dem Kuppelfeld K zugeordneten Feldverriegelung FV dem Bussystem B eingeprägt.

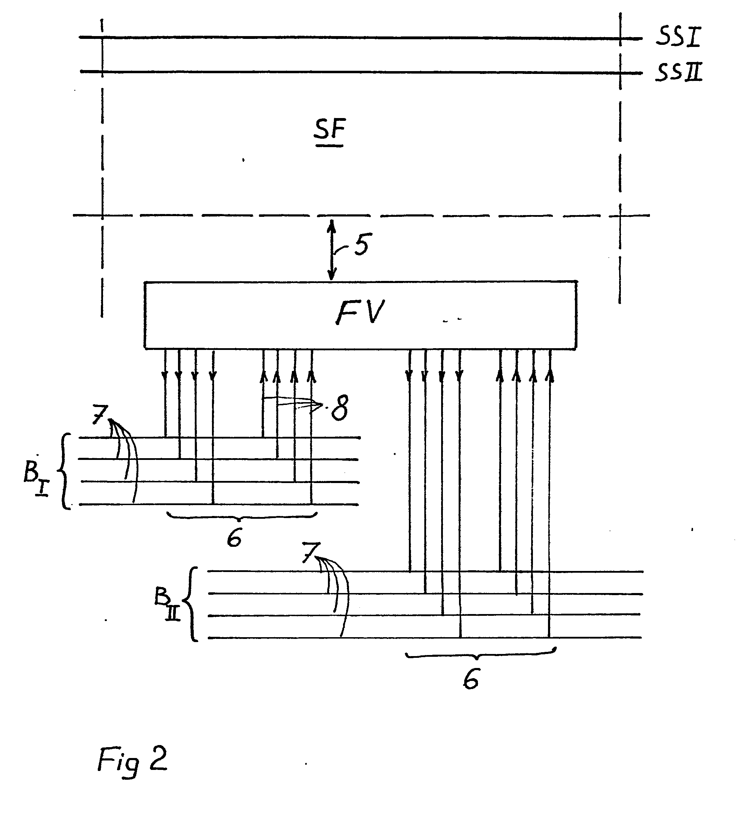

Fig. 2 zeigt ein Ausführungsbeispiel, bei dem ein sogenanntes Parallelbussystem vorgesehen ist. Dabei wird je Zustandsart eine Busleitung 7 benötigt. Auf einer Busleitung 7 wird nach dem bekannten Prinzip der ODER-Schaltung eine bestimmte Zustandsart eingeprägt. Eine Busleitung 7 hat dabei je nach abzubildendem Zustand einen 0-Pegel oder L-Pegel. Zur Darstellung eines Gesamtbildes der Anlagenzustände wird somit lediglich ein einfaches passives Leitungssystem (Bussystem B) benötigt.

Die Feldverriegelung FV ist zweimal (nämlich getrennt für Sende- und Empfangsrichtung) an jedes Bussystem BI bzw. BII angeschlossen und zwar jeweils mit einer Anzahl von Anschlußleitungen 8, die der Anzahl der Busleitungen 7 entspricht. Das Anschlußleitungssystem 6 hat somit doppelt so viele Anschlußleitungen 8 wie das Bussystem BI oder BII Busleitungen 7 aufweist. In Fig. 2 sind lediglich vier Busleitungen 7 je Bussystem B dargestellt. Tatsächlich ist jedoch die Anzahl der benötigten Busslei-tungen 7 größer.

Zur Überprückung größerer Entfernungen kann statt eines Parallelbussystems auch ein serieller Bus vorgesehen werden. In diesem Fall weist jede Feldverriegelung FV eine Schnittstelleneinrichtung auf, in der die einzelnen Zustände der eigenen Feldeinheit und die vom Bussystem empfangenen Zustände parallel gespeichert sind. Auf der Busleitung werden die Zustände nach einem zyklischen Verfahren nacheinander übertragen. Solche seriellen Bussysteme benötigen zur Steuerung des Sendezykluses nicht unbedingt einen zentralen Busverwalter. Es stehen Systeme zur Verfügung, bei denen die Busverwaltung dezentralisiert und partnerschaftlich organisiert ist. Solche Systeme werden aus sicherheitstechnischen Aspekten bevorzugt. Während beim Parallelbussystem die Feldverriegelung FV dem Bussystem B direkte Zustände im gesamten Sammelschienensystem entnehmen kann, muß beim seriellen Bussystem aus den Meldungen der einzelnen Feldverriegelungen FV in den Schnittstellen der Feldverriegelungen FV jeweils ein Gesamtbild der Anlagenzustände errechnet werden. Jedoch bleibt auch hierbei das Prinzip erhalten, daß keine zentrale Einrichtung zur Erstellung des Gesamtbildes vorhanden ist, da jede Feldverriegelung FV selbst in ihrer Schnittstelle das Gesamtbild erstellt.

Ansprüche

1. Verfahren zum schaltfehlergeschützten Betätigen einer aus mehreren Schaltfeldern bestehenden Schaltanlage in einem elektrischen Energieverteilungsnetz, bei der jedem Schaltfeld eine mit Feldverriegelung bezeichnete Einrichtung zur Nachbildung von Feldzuständen und zur Feldverriegelung zugeordnet ist und bei der die Feldzustände der einzelnen Schaltfelder zu einem Gesamtbild des Zustandes der Schaltanlage zusammengefügt werden, dadurch gekennzeichnet, daß die Feldzustände von den Feldverriegelungen (FV) aller Schaltfelder gleichberechtigt einem Bussystem (BI,BII) eingeprägt werden, das alle Schaltfelder (SF) eines Sammelschienensystems (SSI,SSII) miteinander verbindet, wodurch sich das Gesamtbild der Schaltanlage aus den auf den Bussystemen (BI,BII) vorherrschenden Zuständen ergibt und von den Feldverriegelungen (FV) zur Lösung ihrer Verriegelungsaufgabe abgefragt wird.

2. Schaltungsanordnung zur Durchführung des Verfahrens nach Anspruch 1, dadurch gekennzeichnet, daß als Bussystem (BI,BII) ein Parallelbussystem vorgesehen ist, das soviele parallele Busleitungen (7) enthält, wie Feld-, Sammelschienensystem- oder Betriebszustände zu unterscheiden und nachzubilden sind.

3. Schaltungsanordnung nach Anspruch 2, dadurch gekennzeichnet, daß die Feldverriegelungen (FV) an jedes Bussystem (BI, BII) sowohl in Sende- als auch in Empfangsrichtung mit je einer Anzahl von Anschlußleitungen (8) verbunden ist, die der Anzahl der Busleitungen (7) des Bussystems (BI,BII) entspricht.

4. Schaltungsanordnung nach Anspruch 1, dadurch gekennzeichnet, daß als Bussystem (BI,BII) ein serielles Bussystem vorgesehen ist.

5. Schaltungsanordnung nach Anspruch 4, dadurch gekennzeichnet, daß das serielle Bussystem ein partnerschaftlich organisiertes Bussystem ist, also ein System ohne zentralen Busverwalter.

6. Schaltungsanordnung nach Anspruch 4 oder 5, dadurch gekennzeichnet, daß die Schnittstellen des Bussystems Bestandteil der Feldverriegelungen (FV) sind, wobei in diesen Schnittstellen das Gesamtbild der Schaltanlagenzustände aus empfangenen Meldungen der einzelnen Feldverriegelungen (FV) errechnet wird.

Fig 1

SF

A | B

$SSI_A$ — $SSI_B$
$SSII_A$ — $SSII_B$

SF

K

$BI_A$ — $BI_B$
$BII_A$ — $BII_B$

FV FV FV

Fig 2